# EUROPÄISCHE PATENTANMELDUNG

(11) **EP 1 094 284 A2**
(43) Veröffentlichungstag der Anmeldung: **25.04.2001**
(21) Anmeldenummer: 00122570.5
(22) Anmeldetag: 17.10.2000
(51) Int. Cl.: F24J 2/26

(54) **Vorrichtung zur Erwärmung von Medien**

(30) Priorität: 21.10.1999 DE 29918565 U
(71) Anmelder: Heinen, Thomas, 42699 Solingen (DE)
(72) Erfinder: Heinen, Thomas, 42699 Solingen (DE)
(74) Vertreter: Stenger, Watzke & Ring Patentanwälte

(57) **Zusammenfassung**

Die Erfindung betrifft eine Vorrichtung zur Erwärmung von Medien, bestehend aus einer Kollektoreinheit (3) und einem die Kollektoreinheit (3) umgebenden Gehäuse (4), wobei die Kollektoreinheit (3) aus einer Vielzahl schichtartig insbesondere fluchtend hintereinander angeordneter Metallstreifen (1) und einer Rohrleitung (2) zur Durchführung des zu erwärmenden Mediums gebildet ist, wobei die Metallstreifen (1) wärmestrahlungsseitig verjüngt zulaufend ausgebildet sind.

## Beschreibung

Die Erfindung betrifft eine Vorrichtung zur Erwärmung von Medien, bestehend aus einer Kollektoreinheit und einem die Kollektoreinheit umgebenden Gehäuse, wobei die Kollektoreinheit aus einer Vielzahl schichtartig insbesondere fluchtend hintereinander angeordneter Metallstreifen und einer Rohrleitung zur Durchführung des zu erwärmenden Mediums gebildet ist.

Gattungsgemäße Vorrichtungen sind aus dem Stand der Technik bekannt und dienen insbesondere der Erwärmung eines flüssigen Mediums unter Ausnutzung der Sonnenenergie. Als flüssiges Medium wird hierbei vorzugsweise Wasser verwendet.

Die im allgemeinen als Sonnenkollektor bezeichnete Vorrichtung zur Erwärmung von Medien weist in ihrer einfachsten Bauform eine mediumdurchströmte Rohrleitung auf, die zwischen zwei eine Kollektoreinheit bildenden Stahlplatten angeordnet ist. Gleichfalls ist es aus dem Stand der Technik bekannt, eine derartige Kollektoreinheit aus einer Vielzahl schichtartig fluchtend hintereinander angeordneten Metallstreifen zu bilden.

Ferner ist es aus dem Stand der Technik bekannt, die Oberseite des Sonnenkollektors zur Absorptionserhöhung zu schwärzen und zur Einschränkung der Wärmeverluste an die Umgebung mit einer sonnendurchlässigen Scheibe oder Folie abzudecken. Zudem können die umlaufenden Seiten sowie die Unterseite des Sonnenkollektors mit einer Wärmedämmschicht aus Isoliermaterial versehen sein.

Als Anwendungsgebiet für die Nutzung der in Wärme umgewandelten Sonnenenergie bietet sich insbesondere die Brauchwasser- und Schwimmbadwassererwärmung an. Zu diesem Zweck können beispielsweise eine Reihe von Sonnenkollektoren an der Außenfassade eines Gebäudes oder auf dem Hausdach angeordnet sein. Das durch die Sonnenkollektoren erwärmte Wasser kann sodann dem Brauchwassersystem des Hauses beigemengt oder dem Schwimmbad zur Schwimmbadwassererwärmung zugeführt werden.

Insbesondere in Erdteilen mit gemäßigtem Klima kann infolge der klimabedingt niedrigen Sonneneinstrahlung im Jahresmittel in Zeiten geringer Wärmeleistung gerade der Eigenverlust der Kollektoren abgedeckt werden. Um dennoch bei einer die Eigenverlustleistung des Kollektors übersteigenden Sonneneinstrahlung eine möglichst hohe Wirkleistung erzielen zu können, ist es erforderlich, eine möglichst große Wirkfläche vorzusehen. Hierbei gilt: je größer die Wirkfläche desto größer die Wirkleistung. Mit den aus dem Stand der Technik bekannten Sonnenkollektoren läßt sich die Realisierung einer möglichst großen Wirkfläche durch die Anordnung einer Vielzahl von Sonnenkollektoren erreichen. Allerdings ist der Installationsraum für die Anordnung von Kollektoren, z. B. an Außenfassaden oder in Dachbereichen von Gebäuden, infolge baulicher Gegebenheiten begrenzt. Die Anordnung gattungsgemäßer Sonnenkollektoren zur Schaffung einer großen Wirkfläche ist daher in nachteiliger Weise nur in begrenzten Maßen möglich. Zudem geht die Anordnung einer Vielzahl von gattungsgemäßen Kollektoren mit erhöhten Montage- und Installationskosten sowie vor allem mit der Anzahl der verwendeten Sonnenkollektoren ansteigenden Unterhaltskosten einher, so daß eine erhöhte Wirtschaftlichkeit nicht erreicht werden kann.

Ausgehend von dem Stand der Technik liegt der Erfindung daher die Aufgabe zugrunde, eine Vorrichtung zur Erwärmung von Medien dahingehend weiterzubilden, daß unter Beibehaltung gängiger Baugrößen eine Erhöhung der Wirkleistung erzielt wird.

Zur **Lösung** dieser Aufgabe wird mit der Erfindung vorgeschlagen, daß die Metallstreifen wärmestrahlungsseitig verjüngt zulaufend ausgebildet sind.

In vorteilhafter Weise wird mit einer derartigen Ausgestaltung der Metallstreifen wärmestrahlungsseitig eine Vergrößerung der wirksamen Oberfläche der Kollektoreinheit erreicht. Die Vergrößerung der Wirkfläche hat dabei zur Folge, daß bei einer im Vergleich zu herkömmlichen Kollektoreinheiten gleich großen Bauform eine wesentlich höhere Wirkleistung erzielt wird. Gleichfalls ist es denkbar, bei einer im Vergleich zur herkömmlichen Kollektoreinheiten gleich großen Wirkleistung eine wesentlich kompaktere Bauform der Kollektoreinheit zu ermöglichen.

Neben einer Vergrößerung der Wirkfläche wird durch die verjüngt zulaufend ausgebildeten Metallstreifen zudem eine Oberfläche bereitgestellt, die eine Reihe unterschiedlich ausgerichteter Flächennormalen aufweist. Herkömmlich ausgestaltete Wirkoberflächen sind hingegen eben ausgestaltet und weisen insofern lediglich gleich ausgerichtete Flächennormalen auf. Aufgrund der Tatsache, daß die Sonnenstrahlen im wesentlichen gleich ausgerichtet und als Konsequenz aus der Relativlage von Erde und Sonne zueinander unter einem sich ständig ändernden Einfallswinkel wärmestrahlungsseitig auf die Kollektoreinheit auftreffen, bietet die erfindungsgemäße Oberflächenausbildung den Vorteil von zumindest partiell optimiert zur einfallenden Sonnenstrahlung ausgerichteten Oberflächenabschnitten. Ein größerer Wirkungsgrad ist in vorteilhafter Weise die Folge.

Mit dem erfindungsgemäßen Sonnenkollektor wird mithin bei gegenüber herkömmlichen Kollektoreinheiten gleichbleibender Wirkleistung eine kompaktere Bauform erreicht und zudem in Abhängigkeit der einfallenden Sonnenstrahlung ein größerer Wirkungsgrad erzielt.

Gemäß einem Merkmal der Erfindung ist die Kollektoreinheit unter Zwischenlage einer Isolierschicht im Gehäuse angeordnet. Hierdurch kann die Verlustleistung der innerhalb des Gehäuses angeordneten Kollektoreinheit in vorteilhafter Weise gesenkt werden, wobei mit einer Minimierung der Verlustleistung der Wirkungsgrad und damit die Wirtschaftlichkeit des Sonnenkollektors steigt. Als Isoliermaterial sind besonders solche Materialien geeignet, die eine Wärmeleitfähigkeit von unter 0,04 W/Km bei 20°C aufweisen. So können beispielsweise als Isoliermaterial Glaswolle, Schlackenwolle oder Kunstharz-Schaumstoffe eingesetzt werden.

Gemäß einem weiteren Merkmal der Erfindung weist das Gehäuse wärmestrahlungsseitig eine mit der Kollektoreinheit korrespondierende Ausnehmung auf. Somit wird sichergestellt, daß die auf die Vorrichtung treffenden Sonnenstrahlen wärmestrahlungsseitig die Wirkfläche des Kollektors erreichen. Zur Erreichung einer möglichst hohen Wirkleistung sollte die im Gehäuse ausgebildete Ausnehmung mindestens der Wirkfläche der Kollektoreinheit entsprechen.

Gemäß einem weiteren Merkmal der Erfindung ist das Gehäuse wärmestrahlungsseitig mit einer wenigstens die Ausnehmung abdeckenden Folie versehen. Durch diese Maßnahme wird die Kollektoreinheit vor verschmutzenden Umwelteinflüssen geschützt. So werden beispielsweise Schmutzwasser und Dreckpartikel von der Kollektoreinheit ferngehalten. Anstelle der Folie ist gleichfalls eine Glasplatte zur Abdeckung der Kollektoreinheit denkbar.

Gemäß einem weiteren Merkmal der Erfindung besteht die Folie aus einem schwarzen, nicht reflektierenden Material. Hiermit wird erreicht, daß der in Form einer Strahlung auf den Körper auftreffende Wärmestrom nicht reflektiert sondern vollständig absorbiert wird. Dies trägt in vorteilhafter Weise zur Steigerung des Wirkungsgrades bei, da auf die Folie auftreffende Wärmestrahlung durch etwaige Reflexion an der Oberfläche der Folie nicht verlorengeht.

Gemäß einem weiteren Merkmal der Erfindung ist zwischen Abdeckfolie und Kollektoreinheit ein Spaltraum ausgebildet. Ein Teil der von der Folie absorbierten Wärmestrahlung wird an der Kollektoreinheit reflektiert und durch den zwischen Kollektoreinheit und Folie ausgebildeten Spaltraum zurück in Richtung auf die Abdeckfolie gelenkt. Die nun von innen auf die Folie auftretende Wärmestrahlung wird erneut vollständig absorbiert, so daß ein Teil der Wärmestrahlung wieder zurück in Richtung der Kollektoreinheit gelenkt wird. Die Ausbildung eines Spaltraums zwischen Kollektoreinheit und Abdeckfolie bewirkt somit eine verbesserte Strahlungsausnutzung, womit eine im Vergleich zu herkömmlichen Kollektoreinheiten verbesserte Wärmewirkleistung erzielt wird.

Gemäß einem weiteren Merkmal der Erfindung ist die Kollektoreinheit geschwärzt. Ebenso wie das Schwärzen der Abdeckfolie bewirkt dies in vorteilhafter Weise eine vollständige Absorption der auftreffenden Strahlung.

Gemäß einem weiteren Merkmal der Erfindung bestehen die Metallstreifen aus einem Metall mit einer Wärmeleitfähigkeit von wenigstens 50 W/Km bei 20°C. In vorteilhafter Weise eignen sich insbesondere Messing, Magnesium, Aluminium, Kupfer und Silber.

Weitere Einzelheiten, Merkmale und Vorteile der Erfindung ergeben sich aus der nachfolgenden Beschreibung anhand der Zeichnung. Dabei zeigen:
- Fig. 1: eine perspektivische Darstellung der erfindungsgemäßen Vorrichtung;
- Fig. 2: eine Draufsicht der erfindungsgemäßen Vorrichtung;
- Fig. 3: eine Seitenansicht der erfindungsgemäßen Vorrichtung;
- Fig. 4: eine Detailansicht gemäß Fig. 3;
- Fig. 5: eine Detailansicht gemäß Fig. 4 und
- Fig. 6: perspektivische Ansicht eines Metallstreifens, schematisch.

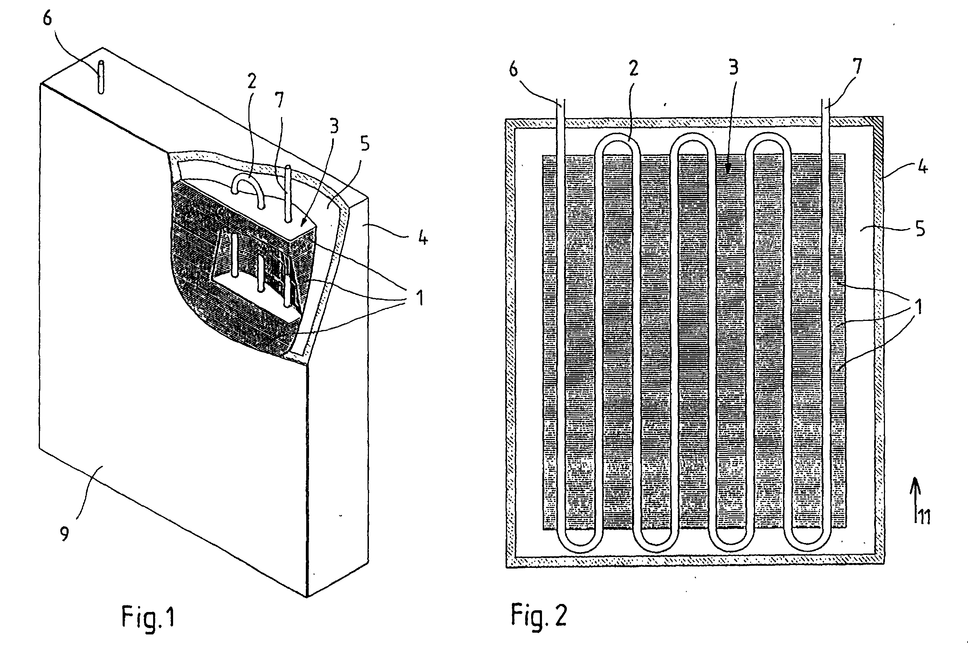

Fig. 1 zeigt in perspektivischer Darstellung die erfindungsgemäße Vorrichtung zur Erwärmung von Medien. Diese besteht aus einer Kollektoreinheit 3 sowie einem die Kollektoreinheit 3 umgebenden Gehäuse 4. Dabei ist zur Verringerung der Verlustleistung die Kollektoreinheit 3 unter Zwischenlage einer Isolierschicht 5 innerhalb des Gehäuses 4 angeordnet.

Die Kollektoreinheit 3 besteht ihrerseits aus schichtartig übereinander und aneinander angeordneten Metallstreifen 1 sowie einer das zu erwärmende Medium führenden Rohrleitung 2, wobei im einfachsten Fall Wasser als zu erwärmendes Medium verwendet wird. Über den Einlaß 6 wird das zu erwärmende Wasser der Rohrleitung zugeführt. Es durchströmt dieselbige und verläßt die Rohrleitung 2 am Auslaß 7. Dies zeigt am deutlichsten Fig. 2.

Die auf die erfindungsgemäße Vorrichtung einfallende Sonnenstrahlung wird wärmestrahlungsseitig an der aus schwarzem, nicht reflektierendem Material bestehenden Folie 9 vollständig absorbiert. Die Wärmestrahlung trifft sodann auf die Kollektoreinheit 3, wobei die thermische Strahlung eine Aufheizung der Metallstreifen 1 zur Folge hat. Die Metallstreifen 1 leiten ihrerseits den Wärmestrom zur wasserdurchströmten Rohrleitung 2. Hier wird sodann der Wärmestrom vom die Rohrleitung 2 durchfließenden Wasser aufgenommen, wodurch sich dieses erwärmt. Zur Erzielung eines möglichst hohen Wirkungsgrades wird mit besonderem Vorteil vorgeschlagen, die Kollektoreinheit 3 unter Zwischenlage einer den Wärmestrom abschirmenden Isolierschicht 5 im Gehäuse 4 anzuordnen. Hierbei werden vorzugsweise als Isolationsmaterial aus Kunstharz hergestellte Schaumstoffe mit einem Wärmeleitkoeffizent von 0,035 W/Km bei 20°C verwendet. Desweiteren wird zur Verbesserung des Wirkungsgrades vorgeschlagen, daß zur Optimierung der Wärmestromübertragung von den Metallstreifen 1 auf das die Rohrleitung 2 durchströmende Wasser metallische Werkstoffe verwendet werden, die einen Wärmeleitkoeffizient von wenigstens 50 W/Km bei 20°C aufweisen. Insbesondere eignen sich hierfür Kupfer und Aluminium.

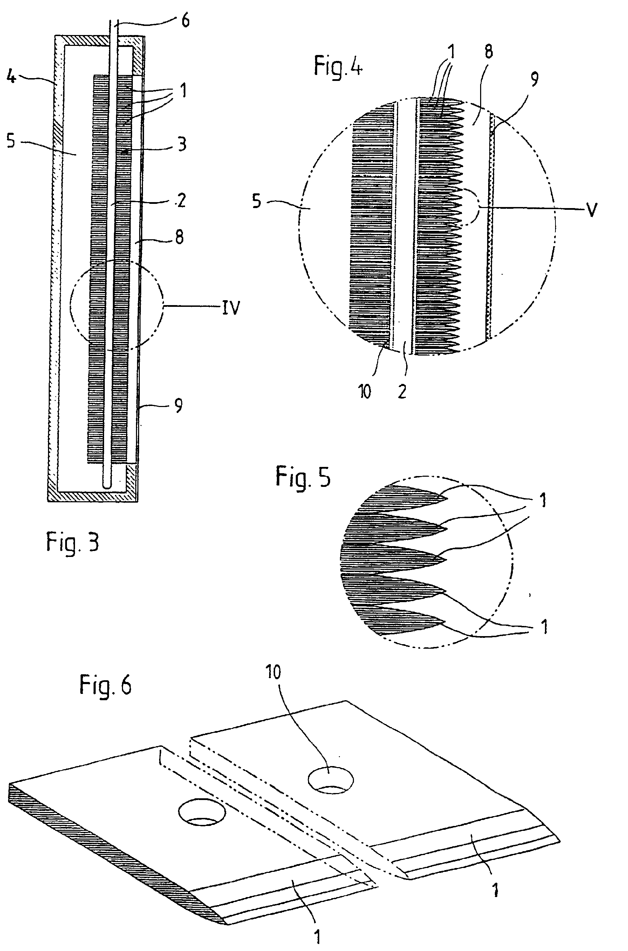

Fig. 3 zeigt die erfindungsgemäße Vorrichtung in einer Seitenansicht. Deutlich zu erkennen ist hier die im Gehäuse wärmestrahlungsseitig ausgebildete Ausnehmung durch die hindurch die einfallende Sonnenstrahlung auf die Kollektoreinheit trifft. Für die Realisierung einer möglichst großen Kollektorwirkfläche ist die Ausnehmung daher in ihren geometrischen Ausmaßen an die Baugröße der Kollektoreinheit angepaßt. Fig. 3 läßt desweiteren deutlich den zwischen Kollektoreinheit 3 und Abdeckfolie 9 ausgebildeten Spaltraum 8 erkennen.

Für die Erzielung einer möglichst großen Wirkleistung ist die zur Verfügung stehende Wirkfläche von entscheidender Bedeutung. In vorteilhafter Weise wird mit der vorliegenden Erfindung vorgeschlagen, die Metallstreifen wärmestrahlungsseitig verjüngt zulaufend auszubilden. Hiermit wird erreicht, daß unter Beibehaltung einer im Vergleich zu herkömmlichen Sonnenkollektoren gleich großen Baugröße eine vergrößerte Wirkfläche erzeugt und damit auch eine größere Wirkleistung erreicht wird. Auch wird durch die erfindungsgemäße Wirkflächenvergrößerung die Möglichkeit geschaffen, bei im Vergleich mit herkömmlichen Sonnenkollektoren gleicher Wirkleistung eine kompaktere Bauform der gesamten Vorrichtung auszubilden. Die strahlungsseitig verjüngt ausgebildeten Kanten der Metallstreifen 1 zeigen am deutlichsten die Fig. 4 und 5.

Für die Herstellung von mit verjüngt ausgebildeten Seitenkanten versehenen Metallstreifen gemäß der Erfindung eignet sich insbesondere das Stanzen und das Umformen, wobei die verjüngt ausgebildeten Bereiche mittels Schleifen oder Pressen hergestellt werden können.

### Bezugszeichenliste

- 1: Metallstreifen
- 2: Rohrleitung
- 3: Kollektoreinheit
- 4: Gehäuse
- 5: Isolierschicht
- 6: Einlaß
- 7: Auslaß
- 8: Spaltraum
- 9: Folie
- 10: Bohrung
- 11: Längsrichtung

## Patentansprüche

1. Vorrichtung zur Erwärmung von Medien, bestehend aus einer Kollektoreinheit (3) und einem die Kollektoreinheit (3) umgebenden Gehäuse (4), wobei die Kollektoreinheit (3) aus einer Vielzahl schichtartig insbesondere fluchtend hintereinander angeordneter Metallstreifen (1) und einer Rohrleitung (2) zur Durchführung des zu erwärmenden Mediums gebildet ist,
**dadurch gekennzeichnet,**
daß die Metallstreifen (1) wärmestrahlungsseitig verjüngt zulaufend ausgebildet sind.

2. Vorrichtung nach Anspruch 1, dadurch gekennzeichnet, daß die Verjüngung ober- und/oder unterseitig an jedem Metallstreifen (1) vorgesehen ist.

3. Vorrichtung nach Anspruch 1 oder 2, dadurch gekennzeichnet, daß die Verjüngung durch Schleifen hergestellt ist.

4. Vorrichtung nach einem der Ansprüche 1 bis 3, dadurch gekennzeichnet, daß die Kollektoreinheit (3) unter Zwischenlage einer Isolierschicht (5) im Gehäuse (4) angeordnet ist.

5. Vorrichtung nach einem der Ansprüche 1 bis 4, dadurch gekennzeichnet, daß das Gehäuse (4) wärmestrahlungsseitig eine mit der Kollektoreinheit (3) korrespondierenden Ausnehmung aufweist.

6. Vorrichtung nach einem der Ansprüche 1 bis 5, dadurch gekennzeichnet, daß das Gehäuse (4) wärmestrahlungsseitig mit einer wenigstens die Ausnehmung abdeckenden Folie (9) versehen ist.

7. Vorrichtung nach einem der vorhergehenden Ansprüche, dadurch gekennzeichnet, daß zwischen Folie (9) und Kollektoreinheit (3) ein Spaltraum (8) ausgebildet ist.

8. Vorrichtung nach Anspruch 7, dadurch gekennzeichnet, daß die Folie (9) aus einem schwarzen, nicht reflektierenden Material besteht.

9. Vorrichtung nach einem der vorhergehenden Ansprüche, dadurch gekennzeichnet, daß die Kollektoreinheit geschwärzt ist.

10. Vorrichtung nach einem der vorhergehenden Ansprüche, dadurch gekennzeichnet, daß die Metallstreifen aus einem Metall mit einer Wärmeleitfähigkeit von wenigstens 50 W/Km bei 20°C gebildet sind.

11. Vorrichtung nach einem der vorhergehenden Ansprüche, dadurch gekennzeichnet, daß die Metallstreifen aus Kupfer, Aluminium oder Messing bestehen.

12. Vorrichtung nach einem der vorhergehenden Ansprüche, dadurch gekennzeichnet, daß die Isolierschicht (5) aus einem Isoliermaterial mit einer Wärmeleitfähigkeit von unter 0,04 W/Km bei 20°C gebildet ist.

13. Vorrichtung nach einem der vorhergehenden Ansprüche, dadurch gekennzeichnet, daß als Isoliermaterial aus Kunstharz hergestellte Schaumstoffe verwendet sind.
